(19) Europäisches Patentamt

European Patent Office

Office européen des brevets

(11) **EP 3 580 531 B1**

(12) **FASCICULE DE BREVET EUROPEEN**

(45) Date de publication et mention de la délivrance du brevet:
**13.01.2021 Bulletin 2021/02**

(21) Numéro de dépôt: **18707096.6**

(22) Date de dépôt: **08.02.2018**

(51) Int Cl.:
*G01F 23/292* (2006.01)

(86) Numéro de dépôt international:
**PCT/FR2018/050308**

(87) Numéro de publication internationale:
**WO 2018/146423 (16.08.2018 Gazette 2018/33)**

(54) **SONDE OPTIQUE DE MESURE DU NIVEAU D'UN LIQUIDE DANS UN RÉSERVOIR**

OPTISCHE SONDE ZUR MESSUNG DES FÜLLSTANDES EINER FLÜSSIGKEIT IN EINEM BEHÄLTER

OPTICAL PROBE FOR MEASURING THE LEVEL OF A LIQUID IN A TANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2017 FR 1751126**

(43) Date de publication de la demande:
**18.12.2019 Bulletin 2019/51**

(73) Titulaire: **Safran Electrical & Power**
**31702 Blagnac Cedex (FR)**

(72) Inventeurs:
• **LE GALL, Sébastien**
**CS 80049 31702 Blagnac Cedex (FR)**
• **THOMASSE, David**
**CS 80049 31702 Blagnac Cedex (FR)**
• **COLIN, Frédéric**
**31830 Plaisance Du Touch (FR)**

(74) Mandataire: **Brevalex**
**56, Boulevard de l'Embouchure**
**B.P. 27519**
**31075 Toulouse Cedex 2 (FR)**

(56) Documents cités:
EP-A1- 0 003 566     EP-A1- 3 112 822
WO-A1-01/09570       US-A1- 2003 155 538
US-B1- 6 693 285     US-B1- 8 362 436
US-B1- 8 695 420

## Description

### DOMAINE TECHNIQUE

La présente invention concerne le domaine de mesure de niveau d'un liquide dans un réservoir, et, plus particulièrement, la mesure du niveau de carburant dans un réservoir d'un aéronef.

### ÉTAT DE LA TECHNIQUE ANTÉRIEURE

Actuellement, on utilise dans le domaine aérien des sondes électriques à effet capacitif pour mesurer le niveau du kérosène dans un réservoir.

Les sondes capacitives sont des dispositifs tubulaires, de différentes longueurs, montées verticalement dans le réservoir. Chaque sonde capacitive est un tube creux alimenté électriquement et dont la grandeur capacitive varie en fonction du niveau du kérosène dans le tube. Les sondes capacitives nécessitent des câbles ou harnais d'alimentation électriques ainsi que des câbles de retour pour rapporter la mesure au calculateur concerné. Ces câbles sont acheminés et connectés aux différentes sondes selon des normes de sécurité très rigoureuses. Ces normes de sécurité sont très efficaces mais très contraignantes et assez complexes d'un point de vue technique. En outre, les harnais électriques sont fréquemment sujets à des phénomènes de bruits électriques induits. Par ailleurs, le système de sondes capacitives comporte beaucoup d'équipements qui nécessitent la gestion d'un nombre non négligeable de références P/N (Part Number).

Il existe d'autres types de technologies pour mesurer le niveau d'un liquide dans un réservoir. Par exemple, le document JP2005127914 révèle un dispositif de détection basé sur la mesure de diminution d'une intensité lumineuse transmise dans une fibre optique dépourvue de gaine.

Toutefois, la mesure est très approximative, réalisée suivant un abaque de référence. En outre, la mesure est tributaire de la source lumineuse qui doit avoir une intensité lumineuse constante au cours du temps ce qui est très difficile à assurer. En effet, l'intensité de la source lumineuse peut fluctuer et en particulier diminuer continuellement au cours du temps. Un autre inconvénient est la fragilité de la fibre optique sans revêtement extérieur dans un milieu liquide comme le kérosène.

US 8 362 436 B1 décrit un système de mesure comprenant une sonde optique adaptée pour mesurer le niveau d'un liquide dans un réservoir, comportant un guide d'onde optique transparent et réfractant adapté pour recevoir une injection d'un faisceau lumineux collimaté selon un angle d'incidence prédéterminé, ledit guide d'onde optique étant configuré pour réfléchir en interne le faisceau lumineux collimaté selon un régime de réflexion totale dans toute partie du guide d'onde optique située dans un milieu gazeux et pour réfracter le faisceau lumineux collimaté selon un régime de réfraction dans toute partie du guide d'onde optique immergée dans un milieu liquide, ledit guide d'onde optique étant susceptible de basculer du régime de réflexion totale vers le régime de réfraction au niveau de l'interface entre le milieu gazeux et le milieu liquide. Le système comprend aussi des miroirs, et un outil de télémétrie adapté pour injecter le faisceau lumineux sous forme d'impulsion lumineuse dans ledit guide d'onde optique et pour recevoir en retour une illumination des matériaux fluorescents formant le guide d'onde optique causé par le faisceau lumineux collimaté dans l'étape de réflexion lui permettant de mesurer la longueur du chemin optique parcouru par le faisceau lumineux et d'en déduire le niveau du liquide dans le réservoir.

Ainsi, l'objet de la présente invention est de proposer une sonde optique passive, remédiant aux inconvénients précités, permettant une sécurité totale tout en s'affranchissant des normes de sécurité très rigoureuses des sondes capacitives et tout en étant précis et robuste.

### EXPOSÉ DE L'INVENTION

L'invention a pour objet une sonde optique adaptée pour mesurer le niveau d'un liquide dans un réservoir, comportant :

- un guide d'onde optique réfractant adapté pour recevoir une injection d'un faisceau lumineux collimaté, ledit guide d'onde optique étant configuré pour réfléchir en interne le faisceau lumineux collimaté selon un régime de réflexion totale dans toute partie du guide d'onde située dans un milieu gazeux et pour réfracter le faisceau lumineux collimaté selon un régime de réfraction optique dans toute partie du guide d'onde immergée dans un milieu liquide, ledit guide d'onde étant susceptible de basculer du régime de réflexion totale vers le régime de réfraction au niveau de l'interface entre le milieu gazeux et le milieu liquide dès lors qu'il est immergé, et

- des miroirs agencés autour dudit guide d'onde optique et adaptés pour réfléchir le faisceau lumineux collimaté et réfracté par le guide d'onde afin d'inverser son parcours au niveau de l'interface entre le milieu gazeux et le milieu liquide, le chemin optique parcouru par le faisceau lumineux étant représentatif du niveau du liquide dans le réservoir.

La sonde optique est entièrement passive et permet de s'affranchir complétement de tout problème d'acheminement de câblage d'alimentation électrique. En outre, elle est très robuste tout en donnant des mesures très précises. De plus, la sonde optique minimise le nombre d'équipements limitant ainsi le nombre de références P/N.

Selon une particularité de la présente invention, la sonde optique comporte un outil de télémétrie adapté pour injecter un faisceau lumineux sous forme d'impulsion lumineuse très brève dans ledit guide d'onde optique et pour recevoir en retour le faisceau lumineux inversé lui permettant de mesurer le temps écoulé et par voie de conséquence la longueur de chemin optique parcourue par le faisceau lumineux et d'en déduire le niveau du liquide dans le réservoir.

L'outil de télémétrie est très précis et il suffit d'une seule fibre optique pour le connecter au guide d'onde optique sachant que la fibre optique est utilisée pour acheminer le faisceau lumineux et pour retourner le faisceau lumineux inversé à l'outil de télémétrie.

Avantageusement, le guide d'onde optique est un cylindre optique solide plein formé d'un matériau transparent et réfractant, ledit cylindre optique comporte une zone de réception adaptée à recevoir l'injection du faisceau lumineux collimaté selon un angle d'incidence prédéterminé, ledit angle d'incidence étant configuré de sorte que dans le régime de réflexion totale, le faisceau lumineux collimaté puisse parcourir un chemin constitué d'une succession de segments droits dont les extrémités sont des points d'impacts du faisceau lumineux sur des parois du cylindre optique selon ledit angle d'incidence prédéterminé, lesdits miroirs sont fixés au cylindre et sont disposés en regard des points d'impacts, dits « hublots ».

Le cylindre optique plein est très robuste et permet d'avoir une mesure très précise en permettant au faisceau lumineux collimaté de parcourir un chemin quasi-hélicoïdal présentant un pas très petit. En outre, la zone de réception permet de verrouiller l'angle d'incidence prédéterminé qui est sélectionné de manière optimale permettant un basculement efficace et invariablement précis au cours du temps.

Avantageusement, le guide d'onde optique est un cylindre optique droit circulaire.

En variante, le guide d'onde optique est un cylindre optique droit à surface prismatique.

Selon un mode de réalisation préféré de la présente invention, le cylindre optique est formé d'un ensemble d'éléments modulaires cylindriques qui sont configurés pour s'empiler fermement les uns sur les autres.

Ceci permet d'adapter la sonde optique à tout type de réservoir et de limiter le nombre de références à un seul.

Avantageusement, chaque élément modulaire cylindrique comporte un miroir et des moyens d'emboitage mâle et femelle adaptés pour assurer un emboitage selon différentes configurations.

Avantageusement, la valeur de l'angle d'incidence est déterminée en fonction des indices de réfraction dudit cylindre optique, dudit milieu gazeux et dudit milieu liquide.

Selon un mode de réalisation particulier de la présente invention, le cylindre optique présente un indice de réfraction d'environ 1,5, le milieu gazeux est de l'air d'indice de réfraction d'environ 1, le milieu liquide est du kérosène d'indice de réfraction d'environ 1,44 et la valeur de l'angle d'incidence est d'environ 60°.

Avantageusement, ledit guide d'onde optique est adapté pour recevoir une pluralité d'injections de faisceau lumineux collimatés.

Ceci permet d'augmenter d'avantage la précision des mesures.

## BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :

La Fig. 1 illustre de manière très schématique une sonde optique adaptée pour mesurer le niveau d'un liquide dans un réservoir, selon un mode de réalisation de l'invention ;
La Fig. 2 illustre de manière schématique une sonde optique adaptée pour mesurer le niveau d'un liquide dans un réservoir, selon un mode de réalisation préféré de l'invention ;
Les Figs. 3A-3C illustrent de manière schématique le chemin optique suivi par le faisceau lumineux injecté par un outil de télémétrie, selon le mode de réalisation de la Fig. 2 ; et
La Fig. 4 illustre de manière schématique des éléments cylindriques pour la construction d'une sonde optique modulaire, selon un mode de réalisation préféré de l'invention.

## EXPOSÉ DÉTAILLÉ DE MODES DE RÉALISATION PARTICULIERS

Le principe à la base de l'invention est de corréler le temps de propagation d'une impulsion lumineuse à la longueur de chemin optique parcouru par ladite impulsion lumineuse puis à la hauteur d'un liquide dans un réservoir.

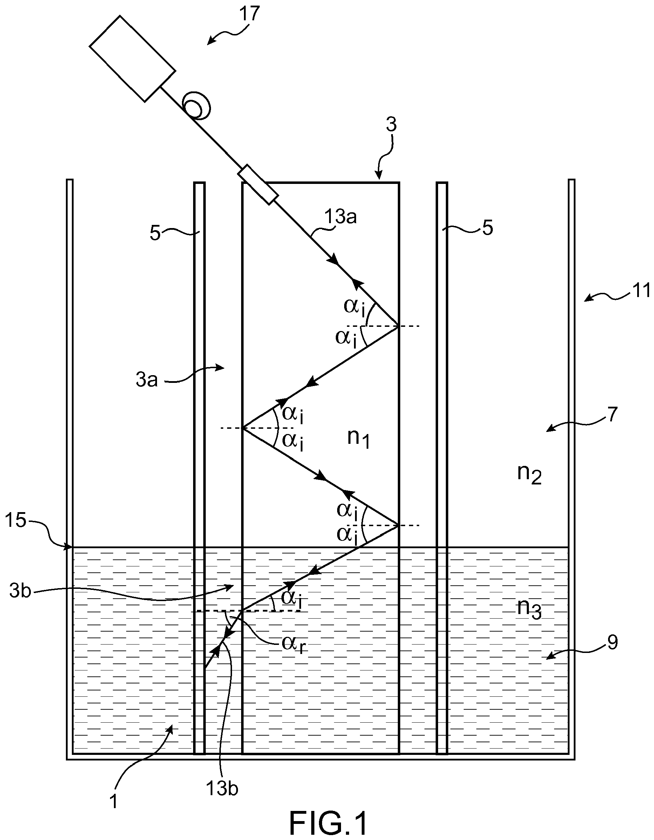

Conformément à l'invention, la Fig. 1 illustre de manière schématique une sonde optique adaptée pour mesurer le niveau d'un liquide dans un réservoir, selon un mode de réalisation de l'invention.

La sonde optique 1 comporte un guide d'onde optique 3 et des surfaces réfléchissantes 5. Le guide d'onde optique 3 est transparent fait en un matériau réfractant de type polycarbonate, PMMA, verre, etc. ayant par exemple un indice de réfraction $n_1$ d'environ 1,5.

On notera que la principale caractéristique optique exploitable des milieux de propagation d'un faisceau lumineux est l'indice de réfraction. Ainsi, trois milieux d'indices différents sont pris en compte pour dimensionner et configurer la sonde optique 1. En plus de l'indice de réfraction $n_1$ du guide d'onde optique 3, on considère aussi l'indice de réfraction $n_2$ d'un milieu gazeux 7 (air ou air chargé en différents gaz plus ou moins enrichi par des vapeurs d'un liquide), ainsi que l'indice de réfraction $n_3$ du milieu liquide 9.

Ainsi, lorsque le guide d'onde optique 3 est disposé dans un réservoir 11 destiné à contenir le liquide 9, une partie 3a du guide d'onde optique 3 peut être en contact avec le milieu gazeux 7 au-dessus du liquide 9 tandis que l'autre partie 3b est immergée dans le liquide 9.

Le guide d'onde optique 3 est configuré pour recevoir une injection d'un faisceau lumineux collimaté 13a et pour réfléchir en interne le faisceau lumineux collimaté 13a selon un régime de réflexion totale dans toute partie 3a du guide d'onde 3 située dans le milieu gazeux 7 et pour réfracter le faisceau lumineux collimaté 13a selon un régime de réfraction dans toute partie 3b du guide d'onde optique 3 immergée dans le milieu liquide 9.

D'une manière générale, un faisceau lumineux collimaté change d'orientation ou de direction lors de la traversée de l'interface entre un milieu réfractant comme celui du guide d'onde optique 3 d'indice de réfraction $n_1$ et un milieu gazeux 7 d'indice de réfraction $n_2$. Ce changement de direction est exprimé par la loi de Snell-Descartes qui donne la relation entre l'angle d'incidence $\alpha_1$ du faisceau lumineux incident, l'angle de réfraction $\alpha_2$ du faisceau lumineux réfracté et les deux indices de réfractions $n_1$ et $n_2$ des deux milieux de part et d'autre de l'interface de la manière suivante : $n_1\sin\alpha_1 = n_2\sin\alpha_2$.

Cette loi est valable jusqu'à un angle d'incidence limite $\alpha_1 = \alpha_L$ qui induit un angle de réfraction rasante qui est égal à 90° par rapport à la normale au plan de l'interface. Au-delà de cet angle d'incidence limite $\alpha_L$, on n'observe plus de réfraction mais une réflexion totale dans le milieu du guide d'onde optique 3. Dans ce cas, pour un angle d'incidence $\alpha_i > \alpha_L$, l'angle de réflexion est aussi égal à l'angle d'incidence $\alpha_i$ et on se trouve dans un régime de réflexion totale interne au guide d'onde optique 3. Ainsi, le guide d'onde optique 3 est configuré pour recevoir une injection d'un faisceau lumineux collimaté 13 ayant un angle incident $\alpha_i$ supérieur à l'angle limite $\alpha_L$. La partie 3b du guide d'onde optique 3 en contact avec le milieu gazeux 7 reste, par conséquent, dans un régime de réflexion totale.

Les conditions de réflexion totale peuvent subitement basculer vers un régime classique de réfraction si le guide d'onde optique 3 baigne dans le milieu liquide 9 d'indice de réfraction $n_3$.

Ainsi, le mode de fonctionnement du guide d'onde optique 3 est susceptible de basculer du régime de réflexion totale vers le régime de réfraction au niveau de l'interface 15 entre le milieu gazeux 7 et le milieu liquide 9. Dès que le milieu extérieur au guide d'onde optique 3 est le milieu liquide 9, le faisceau lumineux collimaté 13a présentant un angle d'incidence $\alpha_i$ est dévié et sort du guide d'onde optique 3 (faisceaux lumineux 13b) selon un angle de réfraction $\alpha_r$ en conformité avec la loi de Snell-Descartes : $n_1\sin\alpha_i = n_3\sin\alpha_r$.

En outre, les surfaces réfléchissantes 5 (dites miroirs) sont agencées autour du guide d'onde optique 3. Ces miroirs 5 sont adaptés pour inverser le parcours du faisceau lumineux collimaté et réfracté 13b par le guide d'onde optique 3 au niveau de l'interface 15 entre le milieu gazeux 7 et le milieu liquide 9. En effet, le faisceau lumineux collimaté et réfracté 13b dans le milieu liquide 9 est redirigé par l'effet miroir pour parcourir dans le sens inverse le chemin optique incident selon la loi optique du parcours inverse de la lumière. Ainsi, le chemin optique parcouru par le faisceau lumineux 13a-13b est représentatif du niveau du liquide dans le réservoir 11.

Avantageusement, on utilise un outil de télémétrie 17 adapté pour injecter l'impulsion lumineuse (i.e. le faisceau lumineux collimaté) 13a dans le guide d'onde optique 3 et pour recevoir en retour le faisceau lumineux inversé par l'effet miroir. Par la mesure du temps écoulé entre l'émission du faisceau lumineux et la réception du faisceau lumineux inversé, l'outil de télémétrie 17 détermine la longueur optique parcourue. En connaissant la hauteur totale du réservoir 11, l'outil de télémétrie 17 détermine la hauteur du liquide 9 dans le réservoir 11.

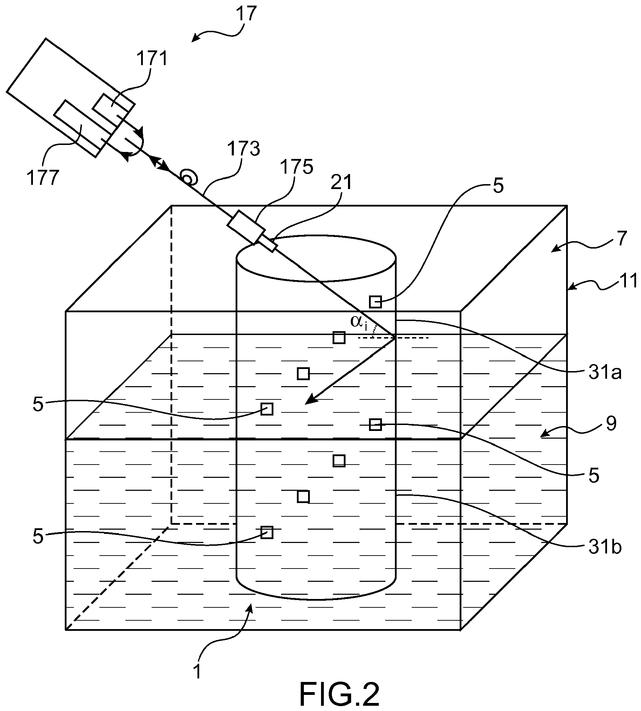

La Fig. 2 illustre de manière schématique une sonde optique adaptée pour mesurer le niveau d'un liquide dans un réservoir, selon un mode de réalisation préféré de l'invention.

Selon ce mode de réalisation, le guide d'onde optique 3 est un cylindre optique 31 plein formé d'un matériau transparent et réfractant. Celui illustré dans la Fig. 2 est un cylindre droit circulaire. En variante, le cylindre optique 31 peut être un cylindre droit à surface prismatique (i.e. un prisme droit à surfaces planes).

Le cylindre optique 31 comporte une zone de réception 21 adaptée à recevoir l'injection du faisceau lumineux 13a selon un angle d'incidence $\alpha_i$ prédéterminé. La valeur de cet angle d'incidence $\alpha_i$ est choisie supérieure à l'angle d'incidence limite $\alpha_L$. En particulier, elle est déterminée en fonction des indices de réfraction $n_1$, $n_2$ et $n_3$ du cylindre optique 31, du milieu gazeux 7 et du milieu liquide 9 respectivement de sorte qu'un régime de réflexion totale soit établi dans la partie 31a du cylindre optique 31 en contact avec le milieu gazeux 7 et qui bascule vers un régime de réfraction dès le premier contact du cylindre optique 31 avec le milieu liquide 9.

A titre d'exemple, pour mesurer le niveau de kérosène dans un réservoir 11, la valeur de l'angle d'incidence $\alpha_i$, qui est aussi l'angle de réflexion totale est d'environ 60°. Plus précisément, la valeur de l'angle d'incidence $\alpha_i$ est de (60,27)° pour un cylindre optique 31 présentant un indice de réfraction $n_1$ d'environ 1,5 plongé dans un réservoir 11 contenant un milieu liquide constitué du kérosène d'indice de réfraction $n_3$ d'environ 1,44 et d'un espace gazeux constitué de l'air vicié de vapeurs de carburant d'indice de réfraction $n_2$ d'environ 1. On impose ainsi un angle d'incidence $\alpha_i$ optimal avec précision afin de bénéficier d'un régime de réflexion dans le milieu gazeux 7 et d'un régime de réfraction dans le milieu liquide 9.

La source lumineuse (source laser) 171 de l'outil de télémétrie 17 est connectée à la zone de réception 21 du cylindre optique 31 par l'intermédiaire d'une fibre optique 173 et d'un collimateur 175. La connectique entre le collimateur 175 et la zone de réception 21 est verrouillée pour que l'angle d'incidence $\alpha_i$ soit constant sans aucune variation. A titre d'exemple, la zone de réception 21 comporte un connecteur en forme de canal en pente représentatif de l'angle d'incidence et qui est adapté pour être fermement connecté au collimateur 175. Ainsi, la source laser 171 de l'outil de télémétrie 17 injecte dans le cylindre optique 31 un faisceau lumineux 13a selon un angle d'incidence $\alpha_i$ prédéterminé et invariant.

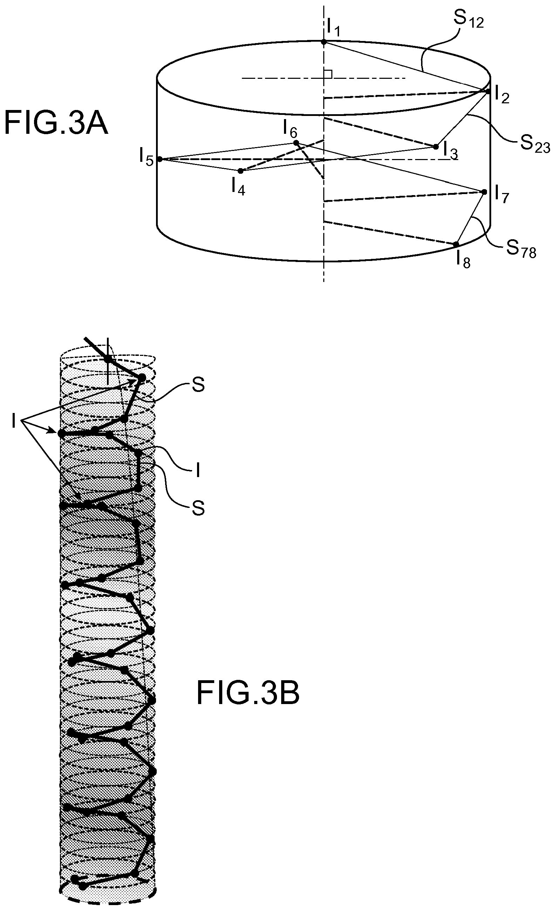

Les Figs. 3A-3C illustrent de manière schématique le chemin optique suivi par le faisceau lumineux injecté par l'outil de télémétrie, selon le mode de réalisation de la Fig. 2.

Les Figs. 3A et 3B illustrent le parcours du faisceau lumineux collimaté 13a dans un régime de réflexion totale correspondant au cas où le cylindre optique 31 ou une partie du cylindre est dans le milieu gazeux 7.

L'angle d'incidence $\alpha_i$ est configuré de sorte que dans le régime de réflexion totale, le faisceau lumineux 13a puisse parcourir à l'intérieur du cylindre optique 31 un chemin pseudo-hélicoïdal constitué d'une succession de segments (s) droits dont les extrémités sont des points d'incidence ou d'impacts I du faisceau lumineux 13a sur des parois du cylindre optique 31 selon l'angle d'incidence $\alpha_i$ prédéterminé. La Fig. 3A illustre huit points d'impacts $I_1$-$I_8$ définissant des segments $s_{12}$-$s_{78}$ de mêmes longueurs. Ainsi, pour un angle d'incidence $\alpha_i$ prédéterminé et un diamètre prédéterminé du cylindre optique 31, les points d'impacts I sont déterminés avec précision. A titre d'exemple pour un cylindre optique 31 ayant un diamètre de 45 mm, le pas (i.e. la hauteur) entre deux points d'impacts I successifs est 15 mm.

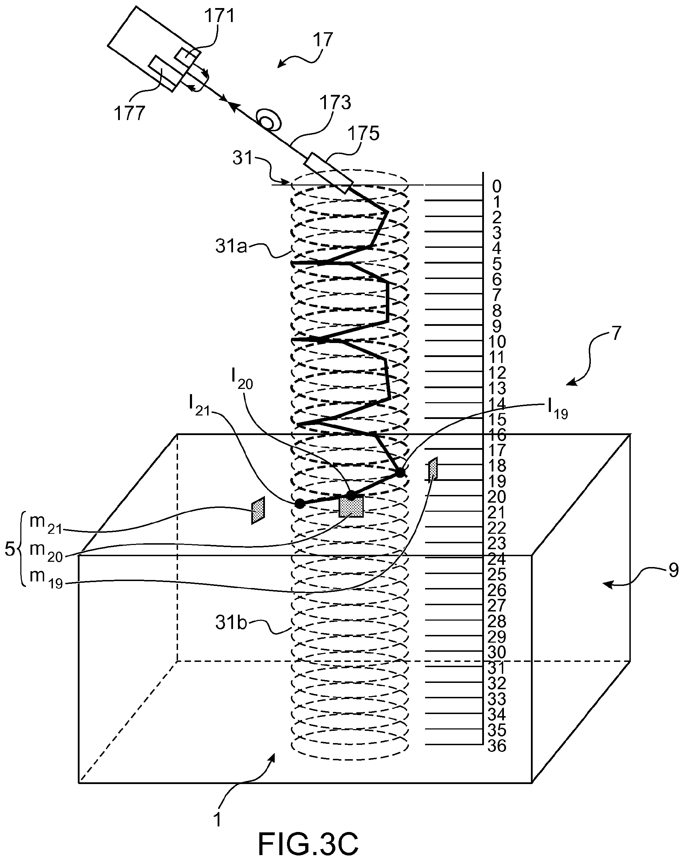

La Fig. 3C illustre le parcours du faisceau lumineux dans un cylindre optique 31 en partie plongé dans le milieu liquide 9 illustrant le basculement entre le régime de réflexion totale et le régime de réfraction.

Chaque point d'impact I forme une sorte de hublot à travers lequel le faisceau lumineux collimaté sort du cylindre optique 31 par réfraction lorsque le hublot est dans la partie 31b du cylindre optique 31 immergée dans le liquide 9. On notera que dans la suite, les termes « hublot » et « point d'impact » sont désignés par le même symbole I sachant que les deux termes sont équivalents dans la présente invention.

En effet, l'angle d'incidence $\alpha_i$ est configuré de sorte que le faisceau lumineux puisse sortir du cylindre optique 31 par réfraction dès que le point d'impact ou hublot I se trouve dans la partie 31b immergée dans le milieu liquide 9. L'exemple de la Fig. 3C montre que les points d'impacts (ou hublots) $I_1$ à $I_{20}$ sont non-immergés tandis que le hublot $I_{21}$ correspond au premier point d'impact immergé. Alors, le faisceau lumineux collimaté est diffracté au hublot $I_{21}$.

Avantageusement, les miroirs 5 de renvoi (seulement trois miroirs $m_{19}$, $m_{20}$ et $m_{21}$ sont représentés) sont fixés au cylindre optique 31 et sont disposés en regard des points d'impacts I (i.e. en regard des hublots I). Ainsi, les miroirs 5 sont solidaires du cylindre optique 31 et chaque hublot I est associé à un miroir 5 de renvoi qui lui fait face pour former un doublé de hublot-miroir.

L'écartement entre un miroir 5 et son hublot est de l'ordre de quelques mm (par exemple, d'environ 5 mm). Ainsi, l'espace entre un point d'impact I et le miroir associé peut être occupé par un milieu liquide ou gazeux.

Les doublés hublot-miroir $I_{19}$-$m_{19}$ et $I_{20}$-$m_{20}$ ne sont pas immergé tandis que le doublé hublot-miroir $I_{21}$-$m_{21}$ est le premier doublé immergé. Ainsi, le faisceau lumineux qui sort du hublot $I_{21}$ est renvoyé par le miroir $m_{21}$ associé à ce hublot $I_{21}$. Le faisceau lumineux est renvoyé vers l'outil de télémétrie 17 en parcourant dans le sens inverse l'intégralité du chemin optique qu'il a parcouru jusqu'au hublot $I_{21}$.

L'outil de télémétrie 17 reçoit le faisceau lumineux collimaté et inversé par le miroir $m_{21}$ et mesure le temps écoulé entre l'émission du faisceau lumineux et la réception du faisceau lumineux inversé.

Soit $K$ la longueur de la fibre optique 173 et collimateur 175 et soit $H(z)$ la hauteur du réservoir 11 dans la direction de la pesanteur. Par ailleurs, soit $\Delta(z)$ la hauteur entre deux hublots I successifs du cylindre optique et $c$ la longueur du segment s (ou corde) entre deux impacts (i.e. hublots) I successifs. Les valeurs $K$, $H(z)$, $\Delta(z)$ et $c$ sont constantes pour une sonde optique 1 donnée et un réservoir 11 donné. Soit $L$ la longueur du parcours total du faisceau lumineux depuis la source laser 171 de l'outil de télémétrie 17. La longueur du parcours total $L$ correspond à la somme de la longueur de la fibre optique $K$ et du chemin optique $d$ parcouru par le faisceau lumineux dans le cylindre optique 31 (i.e. $L = K + d$) et c'est cette valeur $L$ qui est mesurée par l'outil de télémétrie 17.

Avantageusement, l'outil de télémétrie 17 comporte un analyseur 177 qui détermine la longueur du parcours total $L$ du faisceau lumineux en fonction du temps écoulé entre l'émission du faisceau lumineux et la réception du faisceau lumineux inversé. L'analyseur 177 détermine alors le niveau $h(z)$ du liquide 9 dans le réservoir 11 selon la formule suivante :

$$h(z) = H(z) + \frac{(K - L)\Delta(z)}{c}$$

La précision de mesure dépend de la hauteur $\Delta(z)$ entre deux hublots I. A titre d'exemple, pour un cylindre optique 31 de 45 mm de diamètre et une hauteur $\Delta(z)$ entre deux hublots I successifs de l'ordre de 15 mm, on obtient une précision largement suffisante pour mesurer le niveau du liquide 9 dans un réservoir 11. On notera que dans un aéronef, la hauteur $H(z)$ d'un réservoir 11 est de l'ordre de 1500 mm requérant ainsi un cylindre optique 31 ayant une centaine de points d'impacts I. En connaissant le positionnement du cylindre optique 31 par rapport à la référence du fond du réservoir 11, la hauteur $H(z)$ à vide du réservoir 11 peut bien entendu être mesurée par la sonde optique 17.

Selon un autre mode de réalisation (non représenté), le guide d'onde optique 3 (ou le cylindre optique 31) peut être adapté pour recevoir plusieurs injections de faisceau lumineux. A titre d'exemple, le cylindre optique 31 peut comporter deux ou trois zones de réception connectées à deux ou trois collimateurs générant trois voies de chemins optiques permettant d'augmenter davantage la précision des mesures et/ou de diminuer le nombre de hublots. Avantageusement, il suffit d'un seul outil de télémétrie qui peut être configuré pour transmettre et recevoir plusieurs signaux lumineux selon une séquence de pulsation prédéterminée.

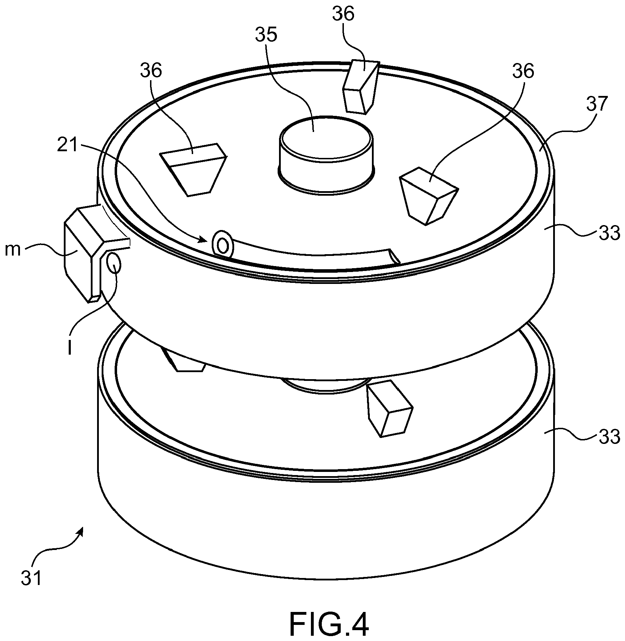

La Fig. 4 illustre de manière schématique des éléments cylindriques pour la construction d'une sonde optique modulaire, selon un mode de réalisation préféré de l'invention.

Selon ce mode de réalisation, le cylindre optique 31 est formé d'un ensemble d'éléments modulaires cylindriques pleins 33 correspondant chacun à un étage du cylindre optique 31 comprenant un doublé hublot-miroir I-m. Les éléments modulaires 31 sont configurés pour s'empiler fermement les uns sur les autres selon un mode d'assemblage de type emboitage, encliquetage, frettage ou autre.

Chaque élément modulaire cylindrique 33 comporte ainsi un miroir m et des moyens d'ajustage et d'emboitage 36 mâle et femelle (seuls les moyens d'emboitage mâle sont représentés). Le miroir m est solidaire de la paroi latérale du modulaire cylindrique 33 et est écarté de cette dernière d'une distance d'environ 5 mm. Les moyens d'emboitage mâle 35, 36 d'un élément modulaire cylindrique 33 sont adaptés pour s'emboiter fermement dans les moyens d'emboitage femelle d'un autre élément modulaire cylindrique selon différentes configurations. Ainsi, les emplacements des miroirs m des différents éléments modulaires se concordent avec les emplacements des points d'impacts I d'un faisceau lumineux parcourant un chemin pseudo-hélicoïdal.

Chaque élément modulaire cylindrique 33 comporte sur son côté supérieur une saillie centrale 35 en forme de plot et un nombre prédéterminé de saillies auxiliaires 36 reparties régulièrement de manière circonférentielle autour de la saillie centrale 35. L'élément modulaire cylindrique comporte sur son côté inférieur (non représenté) une cavité centrale et un nombre prédéterminé de cavités auxiliaires reparties régulièrement de manière circonférentielle autour de la cavité centrale. Les saillies 35, 36 d'un élément modulaire cylindrique 33 s'ajustent et s'emboitent de manière élastique dans les cavités d'un autre élément modulaire cylindrique 33.

L'exemple de la Fig. 4 illustre trois saillies auxiliaires 36 reparties régulièrement autour de la saillie centrale 35. Cette configuration permet de faire varier l'orientation autour de l'axe cylindrique d'un module cylindrique 33 par rapport à son voisin d'un angle polaire multiple de 135°. Bien entendu, la configuration peut être changée en variant le nombre de saillies auxiliaires.

En outre, chaque élément modulaire 33 comporte un joint d'étanchéité 37 permettant un emboitage hermétique et étanche entre les différents modules 33.

On notera que l'élément modulaire cylindrique 33 destiné à être connecté à la fibre optique et à l'outil de télémétrie 17 comporte une zone de réception 21 en forme de canal en pente selon l'angle d'incidence prédéterminé. Avantageusement, seul l'élément modulaire devant être connecté à l'outil de télémétrie, comporte la zone de réception pour la collimation du faisceau.

La sonde optique peut être utilisée pour mesurer le niveau de tout liquide (carburant, eau, etc.) dans un réservoir et, plus particulièrement, est très adaptée pour mesurer le niveau de kérosène dans un réservoir d'un aéronef grâce à sa grande précision et à l'absence totale de risques de sécurité.

En effet, la sonde optique est entièrement passive, ne nécessitant aucun câblage d'alimentation électrique. Elle n'est pas sujette à des problèmes de compatibilité électromagnétique CEM et ne présente aucun échauffement. Elle ne nécessite aucune électronique intégrée et aucun logiciel intégré. La sonde optique peut être construite de manière modulaire ne nécessitant qu'un seul nombre de référence P/N et s'adaptant facilement à des réservoirs de différentes hauteurs et en particulier aux différents niveaux dans les ailes des aéronefs. De plus, sa précision est optimale et ne varie pas au cours du temps tout en étant très robuste.

**Revendications**

1. Sonde optique adaptée pour mesurer le niveau d'un liquide dans un réservoir, comportant :

   - un guide d'onde optique (3) transparent et réfractant adapté pour recevoir une injection d'un faisceau lumineux collimaté (13a) selon un angle d'incidence prédéterminé, ledit guide d'onde optique (3) étant configuré pour réfléchir en interne le faisceau lumineux collimaté selon un régime de réflexion totale dans toute partie (3a) du guide d'onde optique située dans un milieu gazeux (7) et pour réfracter le faisceau lumineux collimaté selon un régime de réfraction dans toute partie (3b) du guide d'onde optique immergée dans un milieu liquide (9), ledit guide d'onde optique (3) étant susceptible de basculer du régime de réflexion totale vers le régime de réfraction au niveau de l'interface (15) entre le milieu gazeux (7) et le milieu liquide (9),
   - des miroirs (5) agencés autour dudit guide d'onde optique (3) avec un écartement entre lesdits miroirs (5) et ledit guide d'onde optique (3) et adaptés pour inverser le parcours d'un faisceau lumineux collimaté et réfracté par le guide d'onde optique (3), et
   - un outil de télémétrie (17) adapté pour injecter le faisceau lumineux sous forme d'impulsion lumineuse dans ledit guide d'onde optique (3) et pour recevoir en retour le faisceau lumineux collimaté et inversé lui permettant de mesurer la longueur du chemin optique parcouru par le faisceau lumineux et d'en déduire le niveau du liquide (9) dans le réservoir (11).

2.    Sonde optique selon la revendication 1, **caractérisé en ce que** le guide d'onde optique (3) est un cylindre optique (31) plein formé d'un matériau réfractant, ledit cylindre optique (31) comporte une zone de réception (21) adaptée à recevoir l'injection du faisceau lumineux collimaté selon un angle d'incidence prédéterminé, ledit angle d'incidence étant configuré de sorte que dans le régime de réflexion totale, le faisceau lumineux collimaté puisse parcourir un chemin constitué d'une succession de segments (s) droits dont les extrémités sont des points d'impacts (I) du faisceau lumineux sur des parois du cylindre optique (31) selon ledit angle d'incidence prédéterminé, lesdits miroirs (5) sont fixés au cylindre optique (31) et sont disposés au regard des points d'impacts, dits hublots (I).

3.    Sonde optique selon l'une quelconque des revendications précédentes, le guide d'onde optique (3) étant un cylindre optique droit circulaire.

4.    Sonde optique selon l'une quelconque des revendications précédentes, le guide d'onde optique (3) étant un cylindre optique droit à surface prismatique.

5.    Sonde optique selon l'une quelconque des revendications précédentes, **caractérisé en ce que** le cylindre optique (31) est formé d'un ensemble d'éléments modulaires (33) qui sont configurés pour s'empiler fermement les uns sur les autres.

6.    Sonde optique selon la revendication 5, **caractérisé en ce que** chaque élément modulaire (33) comporte un miroir et des moyens d'emboitage mâle et femelle adaptés pour assurer un emboitage selon différentes configurations.

7.    Sonde optique selon l'une quelconque des revendications précédentes, **caractérisé en ce que** la valeur de l'angle d'incidence est déterminée en fonction des indices de réfraction dudit cylindre optique (31), dudit milieu gazeux (7) et dudit milieu liquide (9).

8.    Sonde optique selon la revendication 7, **caractérisé en ce que** le cylindre optique (31) présente un indice de réfraction d'environ 1,5, le milieu gazeux (7) est de l'air d'indice de réfraction d'environ 1, le milieu liquide (9) est du kérosène d'indice de réfraction d'environ 1,44 et la valeur de l'angle d'incidence est d'environ 60°.

9.    Sonde optique selon l'une quelconque des revendications précédentes, **caractérisé en ce que** ledit guide d'onde optique (3) est adapté pour recevoir une pluralité d'injection de faisceau lumineux.

**Patentansprüche**

1.    Optische Sonde, die zum Messen des Füllstandes einer Flüssigkeit in einem Behälter geeignet ist, mit:

- einem durchsichtigen und lichtbrechenden optischen Wellenleiter (3), der zur Aufnahme einer Beaufschlagung durch ein kollimiertes Lichtbündel (13a) in einem vorgegebenen Einfallswinkel geeignet ist, wobei der optische Wellenleiter (3) dazu konfiguriert ist, das kollimierte Lichtbündel im Inneren über einen Totalreflexionsbereich in jedem Teil (3a) des optischen Wellenleiters zu reflektieren, der sich in einem gasförmigen Medium befindet, und das kollimierte Lichtbündel über einen Brechungsbereich in jedem Teil (3b) des optischen Wellenleiters zu brechen, der in ein flüssiges Medium (9) eingetaucht ist, wobei der optische Wellenleiter (3) von dem Totalreflexionsbereich in den Brechungsbereich auf der Höhe der Grenzfläche (15) zwischen dem gasförmigen Medium (7) und dem flüssigen Medium (9) schwenkbar ist,
- Spiegeln (5), die um den optischen Wellenleiter (3) herum mit einem Zwischenraum zwischen den Spiegeln (5) und dem optischen Wellenleiter (3) angeordnet sind und dazu geeignet sind, den Weg eines durch den optischen Wellenleiter kollimierten und gebrochenen Lichtbündels umzukehren, sowie
- einem Entfernungsmessgerät (17), das zum Beaufschlagen des Lichtbündels in Form eines Lichtimpulses in dem optischen Wellenleiter (3) sowie rückwärts zum Aufnehmen des kollimierten und umgekehrten Lichtbündels geeignet ist, wodurch es die Länge des von dem Lichtbündel durchlaufenen, optischen Pfades messen und daraus den Füllstand der Flüssigkeit (9) in dem Behälter (11) ableiten kann.

2.    Optische Sonde nach Anspruch 1, **dadurch gekennzeichnet, dass** der optische Wellenleiter (3) ein massiver optischer Zylinder (31) aus einem Brechungsmaterial ist, wobei der optische Zylinder (31) einen Aufnahmebereich (21) umfasst, der zum Aufnehmen der Beaufschlagung des kollimierten Lichtbündels in einem vorgegebenen Einfallswinkel geeignet ist, wobei der Einfallswinkel derart konfiguriert ist, dass in dem Totalreflexionsbereich das kollimierte Lichtbündel einen Pfad durchlaufen kann, der aus einer Folge von geraden Segmenten (s) besteht, deren Enden Auftreffpunkte (1) des Lichtbündels auf Wände des optischen Zylinders (31) in dem vorgegebenen Einfallswinkel darstellen, die Spiegel (5) an dem optischen Zylinder (31) befestigt sind und mit Bezug auf die Auftreffpunkte, sogenannte Bullaugen (1), angeordnet sind.

3. Optische Sonde nach einem der vorhergehenden Ansprüche, wobei der optische Wellenleiter (3) ein gerader kreisförmiger optischer Zylinder ist.

4. Optische Sonde nach einem der vorhergehenden Ansprüche, wobei der optische Wellenleiter (3) ein gerader optischer Zylinder mit prismatischer Oberfläche ist.

5. Optische Sonde nach einem der vorhergehenden Ansprüche, **dadurch gekennzeichnet, dass** der optische Zylinder (31) aus einer Reihe von modularen Elementen (33) besteht, die dazu konfiguriert sind, sich fest aufeinander zu stapeln.

6. Optische Sonde nach Anspruch 5, **dadurch gekennzeichnet, dass** jedes modulare Element (33) einen Spiegel und Verschachtelungsmittel mit Außen- und Innengewinde aufweist, die eine Verschachtelung in unterschiedlichen Ausführungen gewährleisten.

7. Optische Sonde nach einem der vorhergehenden Ansprüche, **dadurch gekennzeichnet, dass** der Wert des Einfallswinkels in Abhängigkeit der Brechungsindizes des optischen Zylinders (31), des gasförmigen Mediums (7) und des flüssigen Mediums (9) bestimmt wird.

8. Optische Sonde nach Anspruch 7, **dadurch gekennzeichnet, dass** der optische Zylinder (31) einen Brechungsindex von ca. 1,5 aufweist, das gasförmige Medium (7) aus Luft mit einem Brechungsindex von ca. 1 besteht, das flüssige Medium (9) aus Kerosin mit einem Brechungsindex von ca. 1,44 besteht, und der Wert des Einfallswinkels ca. 60° beträgt.

9. Optische Sonde nach einem der vorhergehenden Ansprüche, **dadurch gekennzeichnet, dass** der optische Wellenleiter (3) dazu geeignet ist, eine Vielzahl von Lichtbündelbeaufschlagungen aufzunehmen.

**Claims**

1. An optical probe suitable for measuring the level of a liquid in a tank, comprising:

   - a transparent and refracting optical waveguide (3) suitable for receiving an injection of a collimated light beam (13a) at a predetermined angle of incidence, said optical waveguide (3) being configured to internally reflect the collimated light beam according to a total reflection regime in any part (3a) of the optical waveguide located in a gaseous medium (7) and to refract the collimated light beam according to a refraction regime in any part (3b) of the optical waveguide immersed in a liquid medium (9), said optical waveguide (3) being capable of switching from the total reflection regime to the refraction regime at the interface (15) between the gaseous medium (7) and the liquid medium (9),
   - mirrors (5) arranged around said optical waveguide (3) with a spacing between said mirrors (5) and said optical waveguide (3) and suitable for reversing the path of a collimated light beam refracted by the optical waveguide (3), and
   - a telemetry tool (17) suitable for injecting the light beam in the form of a light pulse into said optical waveguide (3) and for receiving in return the collimated and reversed light beam making it possible to measure the length of the optical path travelled by the light beam and to deduce therefrom the level of the liquid (9) in the tank (11).

2. The optical probe according to claim 1, **characterised in that** the optical waveguide (3) is a solid optical cylinder (31) made of refractive material, said optical cylinder (31) comprises a receiving region (21) suitable for receiving the injection of the collimated light beam at a predetermined angle of incidence, said angle of incidence being configured so that, in the total reflection regime, the collimated light beam can travel a path consisting of a series of straight segments (s) the ends of which are points of impact (I) of the light beam on the walls of the optical cylinder (31) at said predetermined angle of incidence, said mirrors (5) are attached to the optical cylinder (31) and are arranged facing the points of impact, termed windows (I).

3. The optical probe according to any one of the preceding claims, the optical waveguide (3) being a right circular cylinder.

4. The optical probe according to any one of the preceding claims, the optical waveguide (3) being a right optical cylinder with prismatic surface.

5. The optical probe according to any one of the preceding claims, **characterised in that** the optical cylinder (31) is formed of a set of modular elements (33) which are configured to be stacked firmly on one another.

6. The optical probe according to claim 5, **characterised in that** each modular element (33) comprises a mirror and male and female snap-fitting means suitable for ensuring snap-fitting in various configurations.

7. The optical probe according to any one of the preceding claims, **characterised in that** the value of the angle of incidence is determined according to the refractive indices of said optical cylinder (31), said gaseous medium (7) and said liquid medium (9).

8. The optical probe according to claim 7, **characterised in that** the optical cylinder (31) has a refractive index of approximately 1.5, the gaseous medium (7) is air with a refractive index of approximately 1, the liquid medium (9) is kerosene with a refractive index of approximately 1.44 and the value of the angle of incidence is approximately 60°.

9. The optical probe according to any one of the preceding claims, **characterised in that** said optical waveguide (3) is suitable for receiving a plurality of light-beam injections.

FIG.1

FIG.2

FIG.3A

$I_1$

$S_{12}$

$I_2$

$S_{23}$

$I_6$

$I_5$

$I_3$

$I_4$

$I_7$

$I_8$

$S_{78}$

S

I

I

S

FIG.3B

FIG.3C

FIG.4

**EP 3 580 531 B1**

## RÉFÉRENCES CITÉES DANS LA DESCRIPTION

**Documents brevets cités dans la description**

- JP 2005127914 B

- US 8362436 B1